# EUROPÄISCHE PATENTSCHRIFT

(11) **EP 2 881 298 B1**
(45) Veröffentlichungstag und Bekanntmachung des Hinweises auf die Patenterteilung: **07.08.2019**
(21) Anmeldenummer: 14191488.7
(22) Anmeldetag: 03.11.2014
(51) Int. Cl.: B60W 30/14, B60W 50/00, B60W 30/08

(54) **Verfahren zur vorausschauenden Beeinflussung einer Fahrzeuggeschwindigkeit**
Method for predictive influence of a vehicle speed
Procédé d'influence prévisionnelle de la vitesse d'un véhicule automobile

(30) Priorität: 21.11.2013 DE 102013223844
(43) Veröffentlichungstag der Anmeldung: 10.06.2015
(73) Patentinhaber: ROBERT BOSCH GMBH, 70442 Stuttgart (DE)
(72) Erfinder: Selem, Moez, 30625 Hannover (DE)

(56) Entgegenhaltungen:
- WO-A1-2011/126431
- WO-A1-2011/162705
- DE-A1-102005 043 471
- DE-A1-102009 030 784

## Beschreibung

### Stand der Technik

Aus der DE 10345319 A1 ist ein Verfahren bekannt, das eine automatisierte, vorausschauende Beeinflussung von Fahrzeugbetriebsparametern wie z.B. der Fahrzeuggeschwindigkeit über einen Tempomaten erlaubt. Dazu wird eine voraus liegende Straßensteigung aus einer digitalen Karte verwendet. Mittels einer analytischen Fahrzeugbetriebskostenfunktion wird unter Nutzung mehrerer Umgebungsparameter, Fahrzeugparameter, Fahrzeugbetriebsparameter und Streckenparameter ein Geschwindigkeitsprofil für einen voraus liegenden Streckenabschnitt errechnet und dieses mittels eines Tempomaten automatisiert umgesetzt. Die Betriebskostenfunktion hat in der Regel zum Ziel, den Treibstoffbedarf zu minimieren und zwar unter Beibehaltung einer vorgegebenen Fahrzeit. Die Berechnung des Geschwindigkeitsprofils wird über ein iteratives Verfahren unter Nutzung der analytischen Kostenfunktion durchgeführt. Diese Schrift lehrt Daten einer Straßenkarte zu verwenden, welche eine Straßenneigungsinformation enthält.

In der Druckschrift WO 2011/126431 A1 wird ein Verfahren vorgestellt, das eine vorausschauende Beeinflussung einer Fahrgeschwindigkeit mittels Regeln beschreibt. Dabei wird die Strecke vor einem Fahrzeug in Segmente aufgeteilt und die Segmente anhand von Straßencharakteristika, wie z.B. der Straßensteigung, in diskrete Situationen klassifiziert. Beispielsweise kann sich das Fahrzeug einem Straßensegment mit hoher Steigung nähern. Auf diese diskreten Situationen wird eine Regelbasis angewendet, welche zum Ziel hat, Sollgeschwindigkeitsvorgaben für einen Tempomaten zu erzeugen, so dass eine Treibstoffeinsparung erzielbar sein soll. Die Straßencharakteristika werden von einem elektronischen Horizont geliefert, welcher mittels einer GPS-Ortsbestimmung und einer digitalen Straßenkarte eine Streckenvorausschau vor der aktuellen Fahrzeugposition bereitstellt.

Die Schrift DE 102009021019 A1 beschreibt ein weiteres Verfahren zum Erzeugen einer treibstoffverbrauchsoptimierten, vorausschauenden Fahrstrategie für Straßenfahrzeuge. Dabei wird mittels Daten einer digitalen Karte für ein zurückzulegendes Straßenstück ein Geschwindigkeitsband aus einer für jeden Streckenabschnitt zulässigen Maximalgeschwindigkeit und einer Minimalgeschwindigkeit erzeugt. Zur Bildung der erlaubten Maximalgeschwindigkeit werden Karteninformationen wie Geschwindigkeitsbeschränkungen oder Kurvengeometrien herangezogen. Zur Bildung einer erlaubten Minimalgeschwindigkeit wird die Maximalgeschwindigkeit unter Berücksichtigung von Fahrervorgaben und weiterer Parameter nach unten verschoben. Innerhalb des so gewonnenen Geschwindigkeitsbandes werden dann verbrauchsoptimale Beschleunigungsphasen und Verzögerungsphasen errechnet. Dabei darf das Geschwindigkeitsband nicht verlassen werden. Zur Umsetzung der Verzögerungsphasen wird Bremsen, Ausrollen im Schubbetrieb und Segeln, wobei der Motor vom Antriebsstrang getrennt wird, eingesetzt. Ein Segeln besitzt Priorität über einen Einsatz des Schubbetriebs und der Schubbetrieb besitzt Priorität vor dem Bremsen, um den Treibstoffbedarf zu minimieren. Damit wird neben dem Einsatz der Bremse auch das Ausrollen im Schubbetrieb oder mittels Segeln zu zuvor berechneten Verzögerungspunkten beschrieben. Zur Berechnung der optimalen Beschleunigungs- und Verzögerungsphasen wird insbesondere die Verwendung von Topografiedaten, wie Höhe, Steigung der Fahrstrecke zwischen einem Startpunkt und einem Zielpunkt der zurückzulegenden Fahrstrecke erwähnt. Um den Rechenaufwand zu begrenzen, erfolgt zuerst eine lokale Optimierung der Fahrstrategie zwischen vorbestimmten Verzögerungs- und Beschleunigungsfixpunkten. Die daraus bestimmten lokalen Fahrstrategien werden dann zu einer Fahrstrategie über die gesamte Fahrroute zusammengesetzt.

Andere Verfahren zur Fahrgeschwindigkeitsbestimmung sind aus der DE 102009023423 A1, DE 102008019174 A1, WO 2011162705 A1, WO2011162706 A1, WO 20011002367 A1 oder der DE 102006001818 A1 bekannt.

### Offenbarung der Erfindung

Der Erfindung liegt die Aufgabe zugrunde, ein Verfahren der gattungsgemäßen Art so zu verbessern, dass ein Rechner mit begrenzter Rechenleistung einsetzbar ist bzw. die Anforderung an eine einsetzbare Hardware gering ist.

Diese Aufgabe wird durch ein Verfahren mit den Merkmalen des Anspruches 1 gelöst.

Die Erfindung erlaubt eine Berechnung mittels eines modell-prädiktiven Verfahrens und schafft ein Verfahren zur Berechnung von optimierten Betriebsstrategien, bei dem die Anzahl der erforderlichen Rechenschritte bei gleicher Segmentierung der Strecke und des Geschwindigkeitskorridors, erheblich reduziert wird, so dass die Anforderungen an die Hardware sehr gering bleiben.

Der Kern der Erfindung liegt in der Vorberechnung eines schmalen Korridors, in dem der optimale Geschwindigkeitsverlauf enthalten ist und in der anschließenden Berechnung des optimalen Geschwindigkeitsverlaufs innerhalb dieses Korridors.

Die Erfindung bietet folgende Vorteile:
Bei einem eigenständigen erfindungsgemäßen System, das nur die Berechnung im Grunde einer Betriebsstrategie, z.B. einer Geschwindigskeitsstrategie, übernimmt, kann zum einen eine weniger leistungsfähige Hardware eingesetzt werden.

Die Berechnung dieser Betriebsstrategie kann zum anderen in vorteilhafter Weise in einem vorhandenen Gerät eingebettet werden, z.B. in einem Fahrzeugleitrechner oder in einem Navigationssystem ohne dabei viele Ressourcen einzubinden.

Das erfindungsgemäße Verfahren baut auf dem Grundgedanken auf, dass eine automatisierte, vorausschauende Beeinflussung von Fahrzeugbetriebsparametern, wie z.B. der Fahrzeuggeschwindigkeit, über einen Tempomaten erreicht wird. Es kann eine voraus liegende Straßensteigung aus einer digitalen Karte verwendet werden. Es kann z.B. ein Geschwindigkeitsprofil für einen voraus liegenden Streckenabschnitt errechnet und dieses z.B. mittels eines Tempomaten automatisiert umgesetzt werden. Durch diese Vorgehensweise wird der Treibstoffbedarf des Fahrzeuges minimiert.

Die Berechnung des Geschwindigkeitsprofils wird über das erfindungsgemäße iterative Verfahren nach Anspruch 1 erreicht.

Die Erfindung baut ebenfalls auf dem Grundgedanken auf, die vor einem Fahrzeug liegende Strecke in Segmente aufzuteilen und die Segmente anhand von Straßencharakteristika, wie z.B. der Straßensteigung, in diskrete Situationen zu klassifizieren. Beispielsweise kann sich das Fahrzeug einem Straßensegment mit hoher Steigung nähern. Es können mit der Erfindung Sollgeschwindigkeitsvorgaben für einen Tempomaten erzeugt werden, so dass die gewünschte Treibstoffeinsparung erzielbar ist. Die Straßencharakteristika können von einem elektronischen Horizont geliefert werden, welcher mittels einer GPS-Ortsbestimmung und einer digitalen Straßenkarte eine Streckenvorausschau vor der aktuellen Fahrzeugposition bereitstellt. Im Gegensatz zum Stand der Technik erfolgt eine grobe Berechnung und anschließend eine feine Berechnung.

Die Erfindung beruht ebenfalls auf dem Gedanken, ein Geschwindigkeitsband aus einer für jeden Streckenabschnitt zulässigen Maximalgeschwindigkeit und einer Minimalgeschwindigkeit zu erzeugen. Der ideale Geschwindigkeitsverlauf wird innerhalb des Geschwindigkeitsbandes errechnet. Dabei wird das Geschwindigkeitsband nicht verlassen. Es können Phasen wie Bremsen, Ausrollen im Schubbetrieb und Segeln genutzt werden.

Vorteilhafte Weiterbildungen der Erfindung sind in den Unteransprüchen gekennzeichnet.

In einer vorteilhaften Weiterbildung des erfindungsgemäßen Verfahrens ist vorgesehen, dass die vorausschauende Beeinflussung unter Berücksichtigung von Umfeldinformationen aus digitalen Karten mittels eines Navigationssystems, mit z.B. GPS-Ortsbestimmung, erfolgt. Damit kann eine vorausschauende Geschwindigkeitsregelung und Treibstoffoptimierung leicht umgesetzt werden.

Bei einer weiteren vorteilhaften Ausführung der Erfindung ist der sich ändernde Parameter eine Straßensteigung. Alternativ können aber auch vorausliegende Kurven oder andere, den Treibstoffkonsum beeinflussende Parameter, berücksichtigt werden.

Für PKWs oder auch Löws hat sich als besonders günstig herausgestellt, dass der realisierte Geschwindigkeitskorridor größer als 3 km / h ist. Durch diesen schmalen Korridor nach dem erfindungsgemäßen Verfahren lassen sich die Anzahl der Berechnungen auf weniger als ein Fünftel gegenüber konventionellen Verfahren reduzieren.

Eine besonders bevorzugte Weiterbildung der Erfindung zeichnet sich dadurch aus, die groben Geschwindigkeitsschritte größer als 0,5 km/h, z.B. 10 km/h, sind und die feinen Geschwindigkeitsschritte kleiner als 0,5 km/h, z.B. 0,1 km/h, sind. Diese Werte stellen einen guten Kompromiss zwischen erforderlichem Rechenaufwand einerseits und Rechengenauigkeit andererseits.

In einer vorteilhaften Weiterbildung des erfindungsgemäßen Verfahrens ist vorgesehen, dass die Segmentlänge zwischen 2 Metern und 50 Metern, z.B. 10 Meter, beträgt.

Ein Ausführungsbeispiel wird anhand der Zeichnungen näher erläutert, wobei weitere vorteilhafte Weiterbildungen der Erfindung und Vorteile derselben beschrieben sind. Es zeigen in schematischer Darstellung:
- Fig. 1: ein Kurvendiagramm, das berechnete Geschwindigkeitsverläufe bzw. einen Geschwindigkeitskorridor nach der Erfindung mit einem Höhenprofil darstellt,
- Fig. 2: eine Segment-Knoten-Darstellung zur Veranschaulichung eines Geschwindigkeitsverlauf, und
- Fig. 3: ein Blockdiagramm, das eine Vorrichtung bzw. ein System zur Ausführung des erfindungsgemäßen Verfahrens zeigt.

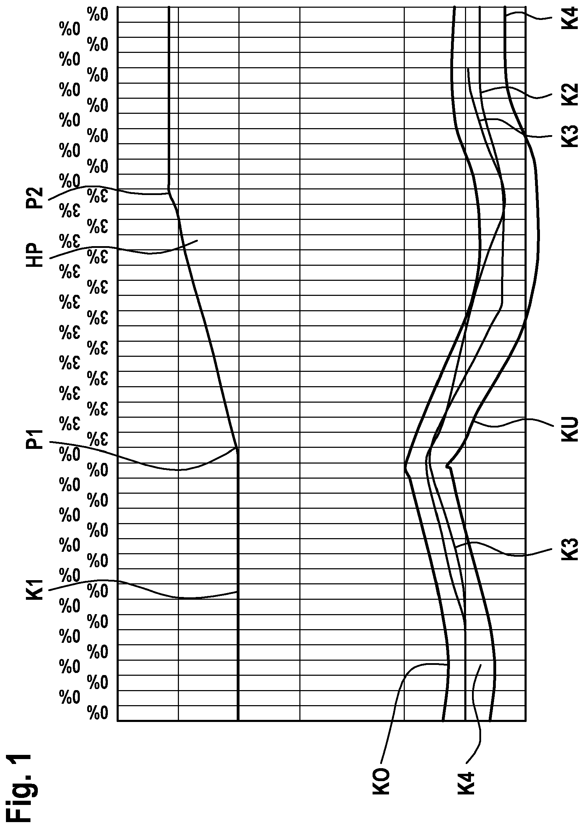

Fig. 1 veranschaulicht ein Verfahren zur vorausschauenden Beeinflussung der Fahrgeschwindigkeit von Fahrzeugen unter Berücksichtigung von Umfeldinformationen und zwar hier eines Höhenprofils HP, das in Fig. 1 durch die Kurve K1 dargestellt ist. Zwischen den Punkten P1 und P2 ist eine kontinuierliche Straßensteigung von 3% vorhanden. Dieses Höhenprofil HP bzw. diese Höhen- oder Steigungsinformation wird aus einer digitalen Karte eines Navigationssystems gelesen.

Im unteren Bereich der Fig. 1 ist eine Berechnung nach dem erfindungsgemäßen Verfahren dargestellt. Anhand des folgenden Beispiels 1 soll aber zum besseren Verständnis zunächst eine Berechnung ohne die Erfindung gezeigt werden.

### Beispiel 1:

Dieses Beispiel zeigt eine übliche, an sich bekannte Berechnung mit einem einfachen modellprädiktiven Verfahren. Bei dieser einfachen Berechnung wird ein Geschwindigkeitsverlauf innerhalb eines vorgegebenen relativ breiten Geschwindigkeitskorridors um die gewählte Setzgeschwindigkeit und für eine bestimmte vorausliegende Strecke berechnet. Für diese Berechnung wird die vorausliegende Strecke in äquidistante Segmente und der Geschwindigkeitskorridor in gleichmäßige Schritte unterteilt. Danach werden für jedes Segment der vorausliegenden Strecke die Durchfahrtskosten berechnet, und zwar von jedem und zu jedem Geschwindigkeitsschritt innerhalb des breiten Geschwindigkeitskorridors. Bei der Berechnung der Durchfahrtskosten werden z.B. die mittlere Steigung an dem jeweiligen Segment und der Energieverbrauch berücksichtigt. Danach wird die Reihe der Geschwindigkeiten ermittelt, bei der die Summe der Durchfahrtskosten minimal ist. Diese Reihe beschreibt einen optimalen Geschwindigkeitsverlauf des Fahrzeugs entlang der Strecke. Damit der optimale Geschwindigkeitsverlauf möglichst genau ermittelt werden kann, ist eine feine Segmentierung der Strecke und des Geschwindigkeitskorridors notwendig. Gleichzeitig erhöht eine feine Segmentierung die Rechenzeit erheblich. Zum Beispiel werden bei einer Strecke von 5 km und einem Korridor von 10 km/h folgende Berechnungsschritte durchgeführt:
a) Bei einer Segmentlänge von 10 m und einem Geschwindigkeitsschritt von 1 km/h, also bei Unterteilung des Geschwindigkeitskorridors in 11 Schritten sind 11 x 11 x 500 = 60.500 Berechnungen der Durchfahrtskosten erforderlich.
b) Bei einer Segmentlänge von 10 m und einem Geschwindigkeitsschritt von 0,1 km/h, also bei Unterteilung des Geschwindigkeitskorridors in 101 Schritten sind dagegen 101 x 101 x 500 = 5.100.500 Berechnungen der Durchfahrtskosten erforderlich.

Die Beispiele 1a und 1b zeigen, dass, umso feiner die Geschwindigkeitsschritte gewählt werden, umso mehr Berechnungen erforderlich sind.

Bei der Komplexität der Berechnung der Durchfahrtskosten, also kleinen Geschwindigkeitsschritten, ergeben sich auf Steuergeräten mit begrenzter Rechenleistung und Speicherkapazität große Einschränkungen der gewählten Segmentierung und damit Einbußen in der Qualität des Ergebnisses. Bei kleinen Geschwindigkeitsschritten ist ein höherer Hardwareaufwand nötig.

Nach dem zweiten folgenden Beispiel, das eine bevorzugte Ausführungsform der Erfindung ist, erfolgt eine Vorberechnung eines schmalen Geschwindigkeitskorridors, der einen optimalen Geschwindigkeitsverlauf erfasst, wobei anschließend ein optimaler Geschwindigkeitsverlauf innerhalb dieses Korridors berechnet wird, wobei zuerst eine Berechnung mit groben Geschwindigkeitsschritten zur Erfassung des schmalen Geschwindigkeitskorridors erfolgt und anschließend eine Berechnung mit feinen Geschwindigkeitsschritten.

### Beispiel 2:

### Schritt 1:

In einem ersten Schritt werden zum Beispiel bei einer Strecke von 5 km und einem Korridor von 10 km/h und bei einer Segmentlänge von 10 m und einem Geschwindigkeitsschritt von 1 km/h, also bei Unterteilung des Geschwindigkeitskorridors in 11 Schritten, 11 x 11 x 500 = 60.500 Berechnungen der Durchfahrtskosten analog zum obigen Beispiel b) durchgeführt.

Im ersten Schritt erfolgt also eine grobe Berechnung, wie oben, mit 60.500 Berechnungen der Durchfahrtskosten.

### Schritt 2:

In einem zweiten Schritt erfolgt aber eine Berechnung bei einem Geschwindigkeitsschritt von 0,1 km/h und ein Abstand von 2 km/h zum vorberechneten Verlauf, d.h. mit einer Korridorbreite von 4 km/h, mit 41 x 41 x 500 = 840.500 Berechnungen der Durchfahrtskosten.

Addiert man alle Berechnungen des ersten und des zweiten Schrittes zusammen, ergeben sich insgesamt 60500 + 840.500 = 901.000 Berechnungen der Durchfahrtskosten. Die Anzahl der durchgeführten Berechnungen wird also bei der gewählten Breite auf weniger als ein Fünftel reduziert.

Bei dem Schritt 1 wäre auch die Anwendung anderer Verfahren möglich, die eine schnelle aber ungenaue Berechnung bieten, wie z.B. einen Regelbasierten Ansatz. Schritt 1 entspricht einem Vorberechnungsschritt.

Fig. 1 veranschaulicht das zweite Beispiel mit den Kurven K2, K3, K4.
Zuerst wird der Verlauf K3 berechnet und zwar mit einem Geschwindigkeitsschritt von 1 km/h. Danach wurde der Verlauf K3 berechnet mit einem Geschwindigkeitsschritt von 0,1 km/h. Allerdings wurden nur Übergänge innerhalb des mit K4 gezeichneten Korridors berücksichtigt. Der Korridor K4 besteht aus einer unteren Grenze KU und einer oberen Grenze KO. Die obere kurze K1 zeigt das zu den unteren Kurven zugehörige Höhenprofil.

In Fig. 1 bedeuten also:
K2: Geschwindigkeitsverlauf mit grober Segmentierung
K3: Geschwindigkeitsverlauf mit feiner Segmentierung
K4: Feiner Berechnungskorridor

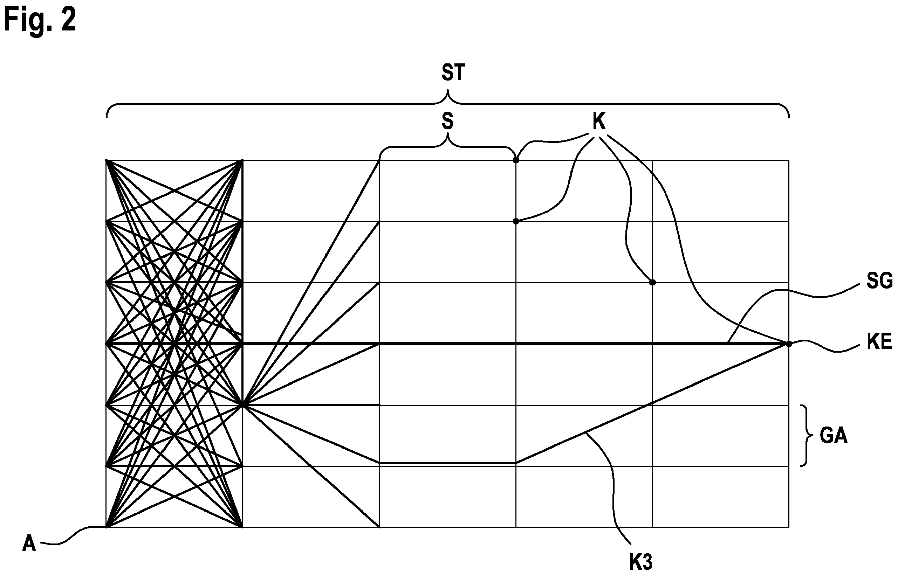

Fig. 2 zeigt eine Segment-Knoten-Darstellung. Mit Segmenten S und Knoten K, wobei die Summe der Segmente die vorauseilende Strecke ST darstellen. Mit A ist die Anfangsposition in Fig. 2 gekennzeichnet. Die Kurve K3, die der Kurve K3 in Fig. 1 entspricht, entspricht einem Geschwindigkeitsverlauf bzw. einer Betriebsstrategie, deren Summe der Durchfahrtkosten minimal ist. In Fig. 2 bedeuten:
- KE =: Kend
- SG =: Setzgeschwindigkeit
- GA =: Geschwindigkeitsausschnitt
- K =: Knoten
- S =: Segment
- A =: Anfang
- ST =: Vorausliegende Strecke

Mit dieser Darstellung wird veranschaulicht, dass es eine Vielzahl von Wegen innerhalb der einzelnen Knoten K gibt, wie in der Nähe des Anfangspunktes A zu sehen ist. Durch weitere Eingrenzungen bzw. Verfahren lassen sich die Anzahl der Berechnungen weiter eingrenzen.

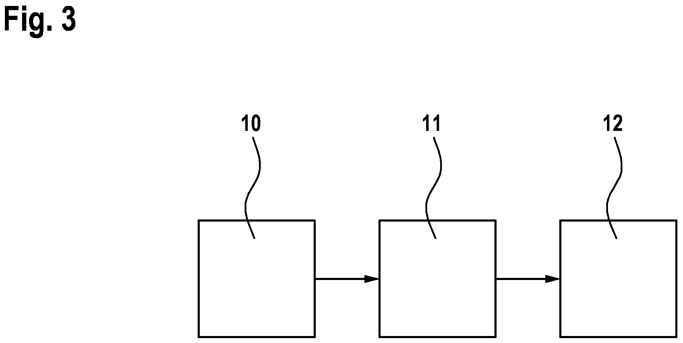

Wie Fig. 3 veranschaulicht, ist ein Navigationssystem 10 mit GPS-Ortung vorhanden, dessen digitale Karte bzw. dessen Kartendaten einem Auswertesystem 11 zur Verfügung gestellt werden. Das System 11 steuert einen Tempomaten 12, so dass das Fahrzeug mit optimierter Geschwindigkeit fährt.

## Patentansprüche

1. Verfahren zur vorausschauenden Beeinflussung einer Fahrzeuggeschwindigkeit, wobei die Fahrzeuggeschwindigkeit an einer Fahrstrecke mit einem sich ändernden Parameter innerhalb eines vorgegebenen Geschwindigkeitskorridors beeinflußt wird, wobei Segmente mit einer definierten Segmentlänge sowie Geschwindigkeitsschritte eingesetzt werden, **dadurch gekennzeichnet, dass** eine Vorberechnung eines schmalen Geschwindigkeitskorridors (K4) erfolgt, der einen optimalen Geschwindigkeitsverlauf erfasst, und dass anschließend ein optimaler Geschwindigkeitsverlauf (K3) innerhalb dieses Korridors berechnet wird, wobei zuerst eine Berechnung (K2) mit groben Geschwindigkeitsschritten zur Erfassung des schmalen Geschwindigkeitskorridors (K4) erfolgt und anschließend eine Berechnung mit feinen Geschwindigkeitsschritten erfolgt.

2. Verfahren nach Anspruch 1, **dadurch gekennzeichnet, dass** die vorausschauende Beeinflussung unter Berücksichtigung von Umfeldinformationen aus digitalen Karten mittels eines Navigationssystems (10) erfolgt.

3. Verfahren nach Anspruch 1 oder 2, **dadurch gekennzeichnet, dass** der sich ändernde Parameter eine Straßensteigung ist.

4. Verfahren nach einem der vorhergehenden Ansprüche, **dadurch gekennzeichnet, dass** der Geschwindigkeitskorridor größer als 3 km / h ist.

5. Verfahren nach einem der vorhergehenden Ansprüche, **dadurch gekennzeichnet, dass** die groben Geschwindigkeitsschritte größer als 0,5 km/h und die feinen Geschwindigkeitsschritte kleiner als 0,5 km/h sind.

6. Verfahren nach einem der vorhergehenden Ansprüche, **dadurch gekennzeichnet, dass** die Segmentlänge zwischen 1 Metern und 100 Metern beträgt.

7. Verfahren nach einem der vorhergehenden Ansprüche, **dadurch gekennzeichnet, dass** eine Positionsbestimmung des Fahrzeugs mittels GPS erfolgt.

## Claims

1. Method for predictively influencing a vehicle speed, wherein the vehicle speed is influenced on a route with a change in parameter within a predefined speed corridor, wherein segments with a defined segment length and speed with steps are used, **characterized in that** a pre-calculation of a narrow speed corridor (K4) which covers an optimum speed profile is pre-calculated, and **in that** subsequently an optimum speed profile (K3) is calculated within this corridor, wherein firstly a calculation (K2) is carried out with rough speed steps for recording the narrow speed corridor (K4) and subsequently a calculation with fine speed steps is carried out.

2. Method according to Claim 1, **characterized in that** the predictive influencing is carried out taking into account environmental information from digital maps by means of a navigation system (10).

3. Method according to Claim 1 or 2, **characterized in that** the change in parameter is the gradient of a road.

4. Method according to one of the preceding claims, **characterized in that** the speed corridor is higher than 3 km/h.

5. Method according to one of the preceding claims, **characterized in that** the rough speed steps are higher than 0.5 km/h and the fine speed steps are lower than 0.5 km/h.

6. Method according to one of the preceding claims, **characterized in that** the segment length is between 1 metre and 100 metres.

7. Method according to one of the preceding claims, **characterized in that** a position of the vehicle is determined by means of GPS.

## Revendications

1. Procédé d'influence prévisionnelle de la vitesse d'un véhicule, la vitesse du véhicule étant influencée au niveau d'une section de route avec un paramètre variable à l'intérieur d'un couloir de vitesse prédéfini, des segments ayant une longueur de segment définie ainsi que des échelons de vitesse étant utilisés, **caractérisé en ce qu'**un calcul préliminaire d'un couloir de vitesse étroit (K4) est effectué, lequel détecte une allure optimale de la vitesse et **en ce que** l'on calcule ensuite une allure optimale de la vitesse (K3) à l'intérieur de ce couloir, un calcul (K2) avec des échelons de vitesse grossiers étant d'abord effectué pour détecter le couloir de vitesse étroit (K4) puis un calcul étant effectué avec des échelons de vitesse fins.

2. Procédé selon la revendication 1, **caractérisé en ce que** l'influence prévisionnelle est effectuée en tenant compte d'informations de l'environnement à partir de cartes numériques au moyen d'un système de navigation (10).

3. Procédé selon la revendication 1 ou 2, **caractérisé en ce que** le paramètre variable est une pente de la route.

4. Procédé selon l'une quelconque des revendications précédentes, **caractérisé en ce que** le couloir de vitesse est supérieur à 3 km/h.

5. Procédé selon l'une quelconque des revendications précédentes, **caractérisé en ce que** les échelons de vitesse grossiers sont supérieurs à 0,5 km/h et les échelons de vitesse fins sont inférieurs à 0,5 km/h.

6. Procédé selon l'une quelconque des revendications précédentes, **caractérisé en ce que** la longueur de segment est comprise entre 1 m et 100 m.

7. Procédé selon l'une quelconque des revendications précédentes, **caractérisé en ce qu'**une détermination de position du véhicule s'effectue au moyen d'un GPS.
